Europäisches Patentamt

European Patent Office

Office européen des brevets

(11) Publication number: **0 176 212**
A1

# (12) EUROPEAN PATENT APPLICATION

(21) Application number: 85305778.4

(22) Date of filing: 14.08.85

(51) Int. Cl.⁴: **F 15 B 15/14**
F 16 J 10/02, B 29 C 63/00

(30) Priority: 20.08.84 US 642540

(43) Date of publication of application:
02.04.86 Bulletin 86/14

(84) Designated Contracting States:
BE DE FR GB IT SE

(71) Applicant: PNEUMO CORPORATION
4800 Prudential Tower
Boston Massachusetts 02199(US)

(72) Inventor: Dirkin, William
1103 Romence Road
Portage Michigan 49002(US)

(72) Inventor: Douglass, Duane
10675 E VW Avenue
Vicksburg Michigan 49097(US)

(72) Inventor: Tootle, James N.
6820 Evergreen
Portage Michigan 49002(US)

(72) Inventor: Benton, Terry L.
8497 Warber
Portage Michigan 49002(US)

(74) Representative: Topps, Ronald et al,
D. YOUNG & CO 10 Staple Inn
London WC1V 7RD(GB)

(54) Fluid actuator including composite cylinder assembly.

(57) Fluid actuator (1) includes a composite cylinder (2)
having circumferential hoop stress windings (15) wrapped
about a liner member (18) forming the piston chamber (16)
wall, and longitudinal tension windings (25) extending from
the outboard end (5) of the cylinder along one side thereof
and around the inboard end (9) of the cylinder to the other
side and back to the outboard end where they are secured to
the cylinder. A compression column (40) of composite
material may be provided between a cylinder end wall (8)
and a permanent structure mount (9) at the inboard end of
the cylinder to extend the length of the cylinder to accommo-
date a tail stock (10) on the piston (3) of a pressure balanced
actuator.

Fig. 2

-1-

FLUID ACTUATOR INCLUDING COMPOSITE CYLINDER ASSEMBLY

This invention relates generally, as indicated, to a fluid actuator including a composite cylinder assembly which permits a substantial reduction in the weight of the actuator without sacrificing strength.

Fluid actuators of the type used in flight controls for aircraft and other high pressure applications must be able to withstand high impulse pressures without failing over extended periods of time. Heretofore, in order to ensure that the actuator had the necessary strength and because of manufacturing considerations, the usual practice was to make the actuator cylinder out of a monolithic metal piece, which not only added considerably to the weight of the actuator in the highly stressed areas, but also in the relatively unstressed areas as well.

In accordance with one aspect of the invention, the fluid actuator includes a cylinder made of relatively high strength to weight composites in the highly stressed areas and relatively light weight metals in the relatively unstressed areas. Circumferential or hoop stress windings are provided around the radially pressurized areas of the actuator cylinder to carry hoop loads and prevent diametrical expansion of the cylinder, and longitudinal tension windings extend over substantially the entire length of the actuator cylinder from the outboard end to the permanent structure mount at the inboard end so that any tension loads developed within the actuator are reacted directly back to the support structure through the longitudinal tension windings.

Further in accordance with the invention, a compression column of composite material may be provided between the permanent structure mount at the inboard end of the cylinder and the adjacent cylinder end wall to extend the length of the cylinder in cases where such additional length is needed to accommodate a tail stock on the piston of a pressure balanced actuator.

Several embodiments of the invention will now be described, by way of example, with reference to the accompanying drawings, in which:

Figure 1 is a side elevation view of a preferred form of fluid actuator in accordance with this invention;

Figure 2 is an exploded isometric view showing the various component parts of the actuator cylinder;

Figure 3 is a longitudinal section through the actuator of Figure 1, taken on the plane of the line 3-3 thereof;

Figure 4 is a longitudinal section through the actuator of Figure 3, taken on the plane of the line 4-4 thereof; and

Figure 5 is a fragmentary longitudinal section through another form of actuator in accordance with this invention.

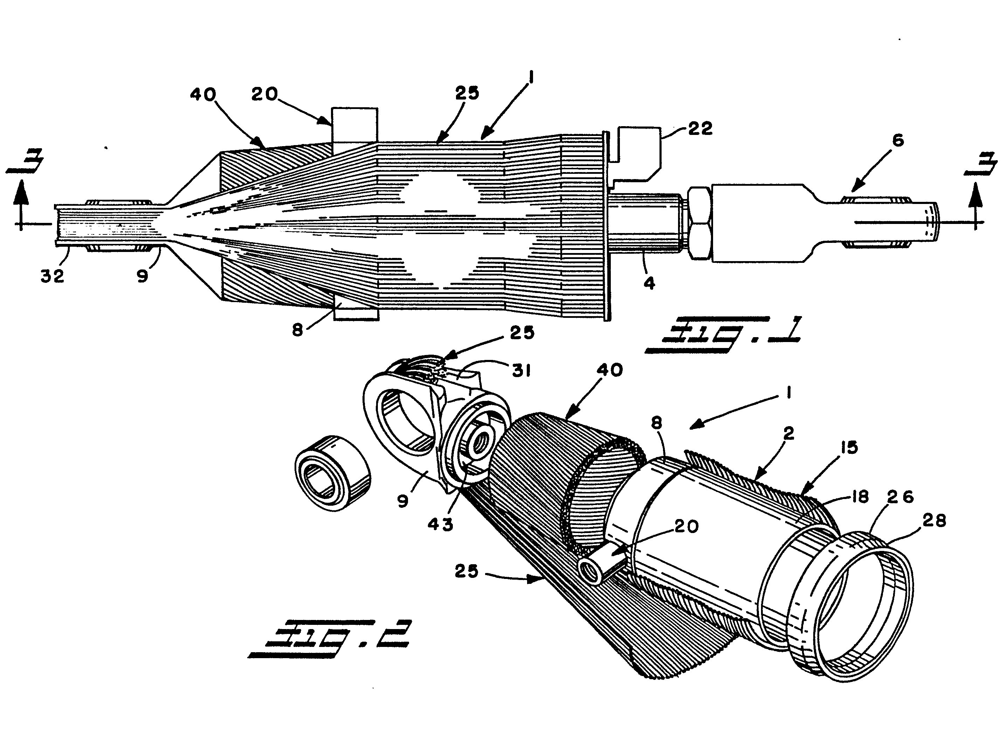

Referring now in detail the drawings, and initially to Figures 1-4 thereof, there is shown a preferred form of fluid actuator 1 in accordance with this invention which generally comprises a cylinder 2 containing a piston 3 having a rod 4 extending therefrom through an end wall or gland 5 at the outboard end of the cylinder. At the outermost end of the rod is a rod end assembly 6 to facilitate connection to a movable part to be actuated. At the inboard end of the cylinder 2 is another end wall member or bulkhead 8 from which extends a suitable mount such as a bearing retainer 9 for attachment to the stationary part of the device to be actuated.

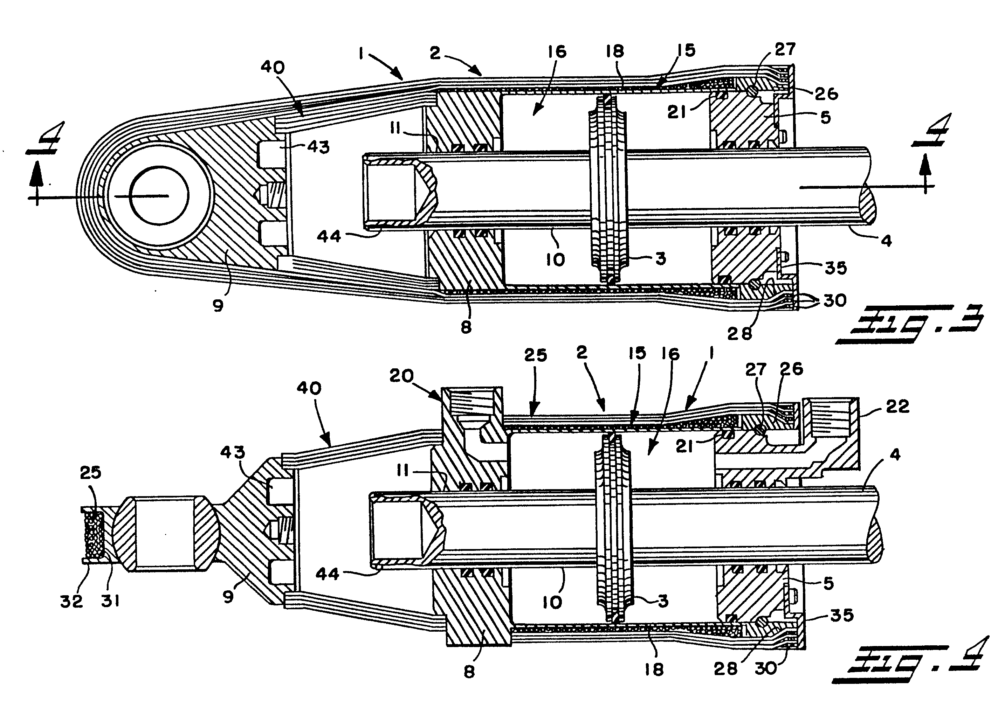

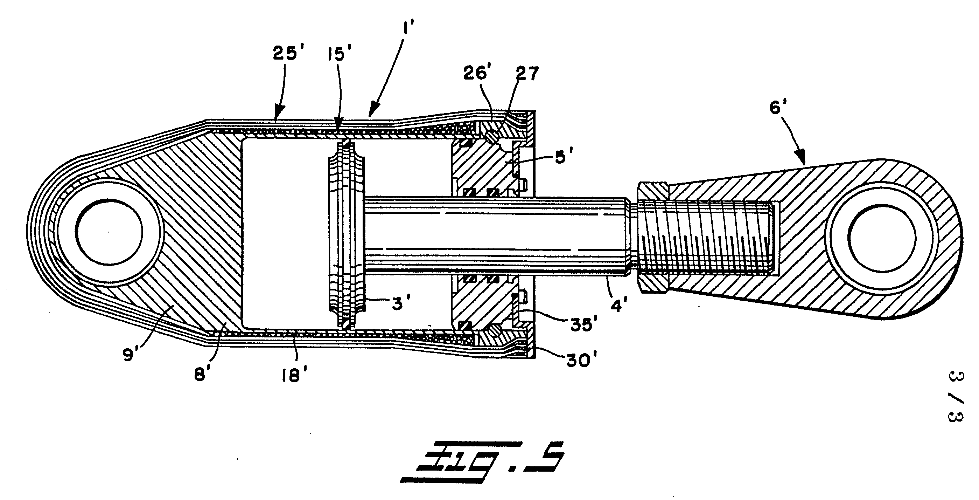

Suitable seals may be provided between the end gland 5 and piston rod 4 to prevent leakage of fluid therebetween. Where the actuator is pressure balanced by means of a tail stock 10 having the same outer diameter as the piston rod extending from the side of the piston opposite the piston rod, a central opening 11 is provided in the bulkhead 8 for receipt of the tail stock, with suitable seals therebetween as shown in Figures 3 and 4.

In accordance with one aspect of this invention, the cylinder 2, rather than being made of the usual monolithic steel construction, is of a composite construction including circumferential or hoop stress windings 15 surrounding the piston chamber 16 over the entire length thereof as shown in Figures 2-4. The hoop stress windings 15 are desirably made of a suitable composite fiber such as a high modulus graphite filament wound fiber which has a relatively high tensile strength to weight ratio to carry the hoop loads and prevent diametrical expansion of the cylinder when high pressure fluid is admitted to either end of the chamber 16 during extension and retraction of the piston. The fibers are impregnated with a suitable resin such as epoxy, polyester, polyimide, etc. Such hoop stress windings preferably surround a sealing, wear resistant liner member 18 which defines the inner wall of the piston chamber. The liner member 18 is preferably a relatively thin liner member and is preferably made of a relatively light weight metal such as aluminum that not only acts as a barrier to the hydraulic fluid, but also provides a suitable surface for hardcoat which forms an extremely hard wear resistant surface that will withstand the sliding contact at the piston head diameter. Of course, the liner member may also be made from other materials such as wear resistant plastics or stainless steel if desired. Moreover, in certain applications the liner member could be eliminated altogether. The purpose of the hoop stress windings, which not only surround the cylinder liner but also the adjacent ends of the end gland 5 and bulkhead 8, is to keep diametrical expansion of the cylinder to a minimum and protect the cylinder liner from fatigue effects.

The bearing retainer 9 as well as the bulkhead 8 and end gland 5 are also desirably made of a relatively light weight metal such as aluminum. Moreover, the extend pressure port 20 preferably extends through the bulkhead 8, and the cylinder liner 18 is sealed to the bulkhead.

The end gland 5, which is at the opposite end of the liner from the bulkhead 8, is formed separately, with the free end of the liner and hoop stress windings surrounding same extending over a portion of the exterior length of the end gland, and a suitable seal 21 between the end gland and liner to prevent fluid leakage therepast. The actuator retract port 22 desirably extends from the outer end wall of the end gland.

When fluid pressure is admitted to the retract side of the piston through the retract port 22, a reaction force is generated in the end gland 5 which is transferred to the bearing retainer 9 at the inboard end of the actuator by longitudinal tension windings 25 which loop around the bearing retainer 9 and extend substantially the entire length of the cylinder from one side of the end gland to the other. These longitudinal tension windings are also desirably made of suitable composite fibers having the required high tensile strength such as high modulus graphite filament wound epoxy impregnated fibers which may be protected from handling damage by a thin layer of fiberglass reinforced composite.

The opposite ends of the longitudinal tension windings 25 are shown secured to the end gland 5 by means of a ring retainer 26 connected to the end gland adjacent the axial outer end of the hoop stress windings 15 in any suitable manner, for example, by a threaded connection or by means of a retaining wire 27 as shown. The annular ring 26 extends radially outwardly beyond the adjacent end of the liner 18 and has a circumferential groove or taper 28 in the radial outer surface thereof.

The taper 28 faces in the direction opposite the head end 9 and is engaged by the ends of the longitudinal tension windings 25 which are affixed thereto through the use of circumferential windings 30 wrapped about the longitudinal tension windings radially outwardly of the groove or taper 28. When there is more than one layer of longitudinal tension windings 25 as shown, circumferential windings 30 are preferably interspersed between each layer of longitudinal tension windings for added strength.

As best seen in Figures 1 and 2, the wrap angle of the longitudinal tension windings 25 changes over the length of the cylinder. That is, in the region of the bearing retainer 9, the longitudinal tension windings are bunched together in a plurality of substantially parallel layers as they extend around the bearing retainer within the groove 31 defined by the external flanges 32 thereon. From there the longitudinal tension windings span out from opposite sides of the actuator at an angle toward the ring retainer 26 until one or more layers substantially completely cover the circumference thereof.

The hoop stress windings 15 are desirably multi-layered adjacent the ring retainer 26 to eliminate any voids between the hoop stress windings and longitudinal tension windings 25 where the longitudinal tension windings extend over the ring retainer. The extend pressure port 20 which extends radially outwardly from the bulkhead 8 is located in an area which is not covered by the tension winding overwrap 25, whereas the retract pressure port 22 desirably extends axially outwardly beyond the outer end of the ring retainer 26 so as not to interfere with such overwrap. Also, an end plate 35 may be attached to the outer end of the end gland 5 with the outer periphery of the end plate overlapping the axial outer end of the ring retainer 26 to prevent the end gland from being pulled into the chamber 16 during retraction of the actuator. The final assembly is placed in an oven and heated to a temperature sufficient to cause the windings 15, 25 to bond to each other.

From the foregoing, it will be apparent that the reaction force which occurs in the end gland 5 as when retract pressure is supplied to the retract side of the piston will be transferred from the end gland first to the ring retainer 26 and then to the longitudinal tension windings 25 which generates a tension load in the longitudinal tension windings that is reacted through these windings back to the bearing retainer 9 and thus to the support structure to which the bearing retainer is connected. When extend pressure is supplied to the extend side of the piston through the extend port 20, a reaction force is generated in the bulkhead 8 which is transferred directly back to the bearing retainer 9.

In the balanced actuator design shown in Figures 1-4, a compression column 40 made of suitable composite fibers such as graphite epoxy impregnated fibers is desirably interposed between the bulkhead 8 and bearing retainer 9 to provide a relatively light weight extension at the inboard end of the cylinder for receipt of the tail stock 10. The compression column 40 is wound separately from low angle helical fibers and inserted between the bulkhead 8 and bearing retainer 9 prior to wrapping the longitudinal tension windings 25 around the assembly.

An annular groove 43 may be provided in the inner end of the bearing retainer 9 for receipt of a hollow end 44 of the tail stock 10 when the piston 3 is fully retracted, which not only reduces the weight of the bearing retainer, but also permits a slight reduction in the overall length of the cylinder.

When there is no need for the fluid actuator to be balanced, the tail stock 10 may be eliminated along with the opening 11 in the bulkhead for the tail stock. Also, the compression column 40 may be eliminated, and the bearing retainer 9' may be made integral with the bulkhead 8' as shown in Figure 5 thus substantially reducing the overall length of the actuator 1'. Of course, in that event the length of the longitudinal tension windings 25' will have to be correspondingly shortened. Otherwise, the details of construction and operation of the actuator 1' shown in Figure 5 are substantially the same as that shown in Figures 1-4, and accordingly the same reference numerals followed by a prime symbol are used to designate like parts.

Although the invention has been shown and described with respect to certain preferred embodiments, it is obvious that equivalent alterations and modifications will occur to others skilled in the art upon the reading and understanding of the specification. The present invention includes all such equivalent alterations and modifications, and is limited only by the scope of the claims.

CLAIMS:

1. A fluid actuator (1) comprising a cylinder (2) including a chamber (16) for receiving a piston-rod assembly (3, 4), said chamber having end wall members (5, 8) at opposite ends thereof and a liner member (18) defining the inner wall of said chamber, characterized in that said liner member (18) has one end in overlapping engagement with one of said end wall members (5), said one end wall member (5) having a ring portion (26) extending radially outwardly beyond said one end of said liner member, circumferential hoop stress windings (15) extending circumferentially around said liner member over the entire length thereof, said hoop stress windings extending substantially the full radial extent of said ring portion (26) outwardly of said one end of said liner member (5), and longitudinal tension windings (25) extending over said circumferential hoop stress windings (15).

2. The actuator of claim 1 further characterized in that said longitudinal tension windings (25) extend around the end of said cylinder opposite said one end wall member (5) from one side to the other, and securing means (28, 30) are provided for securing the opposite ends of said longitudinal tension windings (25) to said ring portion (26).

3. The actuator of claim 2 further characterized in that said cylinder includes a support structure mount (9) at said end, said longitudinal tension windings (25) extending around said support structure mount intermediate the ends of said longitudinal tension windings.

4. The actuator of claim 3 further characterized in that said longitudinal tension windings (25) are substantially parallel to each other in the region of said support structure mount (9) and then fan out from opposite sides of said cylinder at an angle toward the other end (5) of said cylinder, said longitudinal tension windings (25) substantially completely covering said other end (5) of said cylinder.

5. The actuator of claim 2 wherein said chamber (16) contains a piston (3) having a rod (4) extending from one side of said piston through said one end wall member (5), and a tail stock (10) extending from the opposite side of said piston through said other end wall member (8), further characterized by a compression column (40) between said support structure mount (9) and the other end wall member (8) which provides an extension at the inboard end of said cylinder for receipt of said tail stock (10).

6. A fluid actuator (1) comprising a cylinder (2) including a chamber (16) for receiving a piston-rod assembly (3, 4), said chamber having end wall members (5, 8) at opposite ends thereof, a liner member (18) defining the inner wall of said chamber, said liner member being surrounded by circumferential hoop stress windings (15) which prevent diametrical expansion of said liner member, and longitudinal tension windings (25) extending over substantially the entire length of said cylinder, said cylinder including a support structure mount (9) at one end, characterized in that said longitudinal tension windings (25) extend around said support structure mount intermediate the ends of said longitudinal tension windings, and securing means (28, 30) are provided for securing the opposite ends of said longitudinal tension windings to said cylinder at the other end thereof.

7. The actuator of claim 6 further characterized in that said support structure mount (9) includes a pair of external flanges (32) defining a semi-annular groove (31) therebetween for receipt of said longitudinal tension windings (25), said longitudinal tension windings (25) being substantially parallel to each other in the region of said support structure mount (9) and then fanning out from opposite sides of said cylinder at an angle toward said other end of said cylinder, said securing means (28, 30) being attached to the other end wall member (5) at the outboard end of said cylinder.

8. The actuator of claim 7 further characterized by an end plate (35) secured to the outer end of said other end wall member (5) for preventing said other end wall member from being pulled into said chamber.

9. A fluid actuator (1) comprising a cylinder (2) including a chamber (16) for receiving a piston-rod assembly (3, 4), a support structure mount (9) at one end of said cylinder, characterized by longitudinal tension windings (25) extending around said support structure mount (9) intermediate the ends of said longitudinal tension windings from one side to the other, and securing means (28, 30) for securing the opposite ends of said longitudinal tension windings (25) to said cylinder at the other end thereof.

10.   The actuator of claim 9 wherein said chamber (16) includes a pair of separate end wall members (5, 8) at opposite ends thereof, further characterized in that said securing means comprises a ring retainer (26) attached to the end wall member (5) at the other end of said cylinder, said ring retainer including a circumferential groove (28) in the outer surface thereof which receives the opposite ends of said longitudinal tension windings (25), and means (30) for securing said longitudinal tension windings (25) in said groove (28).

FIG. 1

FIG. 2

Fig. 3

Fig. 4

0176212

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 248 062 (McLAIN) | | F 15 B 15/14<br>F 16 J 10/02<br>B 29 C 63/00 |
| A | US-A-4 189 985 (HARRIS) | | |
| A | DE-A-1 627 848 (SACK) | | |
| | ----- | | TECHNICAL FIELDS SEARCHED (Int. Cl.4)<br><br>F 15 B<br>F 16 J<br>B 29 C |

The present search report has been drawn up for all claims

| Place of search<br>THE HAGUE | Date of completion of the search<br>22-11-1985 | Examiner<br>KNOPS J. |
|---|---|---|